(19) Europäisches Patentamt
European Patent Office
Office européen des brevets

(11) Veröffentlichungsnummer: **0 293 713 A1**

(12) # EUROPÄISCHE PATENTANMELDUNG

(21) Anmeldenummer: 88108233.3

(22) Anmeldetag: 24.05.88

(51) Int. Cl.⁴: **C08G 73/16**

(30) Priorität: 02.06.87 DE 3718396

(43) Veröffentlichungstag der Anmeldung: 07.12.88 Patentblatt 88/49

(84) Benannte Vertragsstaaten: DE FR GB IT

(71) Anmelder: BAYER AG
Konzernverwaltung RP Patentabteilung
D-5090 Leverkusen 1 Bayerwerk(DE)

(72) Erfinder: Kricheldorf, Hans-Rytger, Prof.Dr.
Menzelstrasse 10
D-2000 Hamburg 52(DE)
Erfinder: Pakull, Ralf, Dipl.-Chem.
Memelerstrasse 3
D-2000 Hamburg 70(DE)
Erfinder: Eckhardt, Volker, Dr.
Bodelschwinghstrasse 14
D-4150 Krefeld(DE)
Erfinder: Dicke, Hans-Rudolf, Dr.
Bodelschwinghstrasse 16
D-4150 Krefeld(DE)

(54) **Thermotrope Polyesterimide mit ausgezeichneter Verarbeitbarkeit, Verfahren zu ihrer Herstellung und ihre Verwendung zur Herstellung von Formkörpern, Filamenten, Fasern und Folien.**

(57) Thermotrope Polyesterimide auf Basis von N-(ω-Carboxyalkylen)-trimellithsäureimiden und Diphenolen zeichnen sich durch überlegene mechanische Eigenschaften aus und sind dennoch gut verarbeitbar.

EP 0 293 713 A1

# Thermotrope Polyesterimide mit ausgezeichneter Verarbeitbarkeit, Verfahren zu ihrer Herstellung und ihre Verwendung zur Herstellung von Formkörpern, Filamenten, Fasern und Folien

Die Erfindung betrifft hochmolekulare thermotrope Polyesterimide mit ausgezeichneter Verarbeitbarkeit und guten mechanischen Eigenschaften, ein Verfahren zu ihrer Herstellung und ihre Verwendung zur Herstellung von Formkörpern, Filamenten, Fasern und Folien.

Als "thermotrop" bezeichnet man solche Substanzen, die flüssigkristalline Schmelzen bilden. Thermotrope Polykondensate sind hinreichend bekannt, vergleiche z.B.

F. E. McFarlane et al., Liquid Crystal Polymers II, Contemporary Topics in Polymer Science, Vol. 2, Plenum Publishing Corporation, 1977;

W. J. Jackson und H. G. Kuhfuss, J. Polymer Science, Polymer Chem. Ed. 14. 2042 (1976);

W. C. Wooten et al. in A. Ciferri "Ultra-high Modulus Polymers", Applied Science Publ., London 1979, S. 362 f;

A. Blumstein et al,, "Liquid Crystalline Order in Polymers", Academic Press 1978;

J. Preston, Angew. Makromol. Chem. 109/110, S. 1 - 19 (1982);

A Ciferri, W. R. Krigbaum, R. B. Meyer "Polymer Liquid Crystals", Academic Press, New York, 1982;

M. G. Dobb und J. E. McIntyre, Advances in Polm. Sci 60/61, Springer-Verlag, Berlin 1984;

EP 1185, 1340, 8855, 11 640 15 856, 17 310, 18 145, 18 709, 22 344, 44 205, 49 615, 131 846, 132 637, 134 956, 134 959, 141 320, 165 399, 170 935, 189 073;

US 3 991 013, 3 991 014, 4 066 620, 4 067 852, 4 083 829, 4 107 143;

WO 79/797, 79/1030, 79/1040.

Der flüssig-kristalline Zustand von Polymerschmelzen läßt sich mit Hilfe eines Polarisationsmikrokops untersuchen: Für die Untersuchungen war das Okular mit einem Aufsatz ausgerüstet, der eine Fotodiode im Brennpunkt der Okularlinse angeordnet enthielt. Anhand eines nachgeschalteten Meßverstärkers mit Regeleinrichtung wurde der Meßwert am eingeschalteten Mikroskop bei parallel angeordneten Nicolschen Prismen in Abwesenheit einer Materialprobe auf 100 Skalenteile eingestellt. Bei gekreuzten Nicolschen Prismen ergab sich dann ein Wert von 0,01 Skalenteilen.

Die Schichtdicke der untersuchten Polykondensatschmelzen betrug 100 µm.

Die Untersuchung der Polykondensate erfolgt nach dem Aufschmelzen der Proben bei Temperaturen zwischen 140 und 400 °C. Sofern in diesem gesamten Bereich oder in einem Teil davon eine Aufhellung der zwischen den gekreuzten Nicolschen Prismen beobachteten Schmelze auftrat, wurde das Polykondensat als thermotrop flüssig-kristallin eingestuft.

Die flüssig-kristallinen Polykondensate zeigen in der Meßanordnung Werte über 1 Skalenteil, meist Werte von 3 bis 90 Skalentielen. Für amorphe Schmelzen z.B. aromatische Polycarbonate, wurden dagegen Werte von weniger als 0,1 Skalenteil gefunden.

Die oben beschriebene Metode ist für eine Schnellbestimmung im Laboratorium besonders geeignet und liefert in nahezu allen Fällen zweifelsfreie Ergebnisse. In Zweifelsfällen kann es dagegen sinnvoll sein, das Vorhandensein flüssig-kristalliner Komponenten mittels Röntgenweitwinkelstreuung in der Schmelze nachzuweisen, wie es z.B. bei G. W. Gray und P. A. Windsor, "Plastic Crystals, Physico-Chemical Properties und Methods of Investigation", insbesondere Chapter 3, John Wiley & Sons, New York, Sydney, Toronto 1974 beschrieben ist.

Formkörper, die aus flüssig-kristalliner Schmelze vollaromatischer Polykondensate hergestellt werden, weisen mechanische Festigkeiten und Steifigkeiten auf, wie sie normalerweise bei unverstärkten, aus isotroper Schmelze verarbeiteten Polykondensaten nicht gefunden werden; jedoch läßt die Verarbeitbarkeit derartiger Polykondensate manche Wünsche offen.

Die DE-OS 20 25 971 betrifft hochmolekulare vollaromatische Polyester auf Basis von p-Hydroxybenzoesäure, aromatischen Dicarbonsäuren (wie Terephthal- oder Isophthalsäure) und Diphenolen (wie Hydrochinon oder 4,4′-Dihydroxybiphenyl). Aufgrund der verwendeten Komponenten sind diese Polyester thermotrop; sie können z. B. zu Fasern verarbeitet werden. Von den 13 Polyestern der Beispiele schmilzt ein einziger unter 300 °C. Diese Polyester sind also schlecht verarbeitbar.

Die DE-OS 3 516 427 beschreibt thermotrope Polyesterimide auf Basis von Alkylen-α,ω-bis-trimellithsäureimiden und verschiedenen aromatischen Dihydroxyverbindungen. Diese Polyester sind zwar thermoplastisch verarbeitbar; von den in den Beispielen beschriebenen, ausgeprägt flüssigkristallinen Zusammensetzungen (d.h. mit einer mehr als 25 °C breiten Mesophase) ist gleichfalls nur eine einzige unterhalb von 300 °C schmelzbar.

Für viele Anwendungen, z.B. im Bereich der Optoelektronik, werden hingegen thermoplastisch leicht verarbeitbare Werkstoffe mit gegenüber konventionellen, aus isotroper Schmelzphase verarbeiteten Thermoplasten verbesserten mechanischen Eigenschaften benötigt.

Aufgabe der vorliegenden Erfindung war es daher, thermotrope Polykondensate bereitzustellen, die gegenüber den Polyestern der DE-OS 2 025 971 bzw. den Polyesterimiden der DE-OS 3 516 427 besser verarbeitbar sind und dennoch konventionellen Thermoplasten überlegene mechanische Eigenschaften aufweisen.

Bevorzugte neue thermotrope Polykondensate sollten bei einer Temperatur unter 320 °C, vorzugsweise unterhalb von 300 °C und besonders bevorzugt unterhalb von 280 °C thermoplastisch verarbeitbar sein.

Bevorzugte neue thermotrope Polykondensate sollten weiterhin einen Zug-E-Modul von mindestens 3000 MPa, vorzugsweise von mindestens 5000 MPa, insbesondere von mindestens 6000 MPa besitzen.

Überraschenderweise wurde nun gefunden, daß Polyesterimide, die einkondensierte Reste von N-(ω-Carboxyalkylen)trimellithsäureimiden, bestimmten Diphenolen sowie gegebenenfalls p-Hydroxybenzoesäure enthalten, die gewünschte Kombination vorteilhafter Eigenschaften besitzen.

Gegenstand der Erfindung sind thermotrope Polyesterimide mit wiederkehrenden Einheiten der Formeln

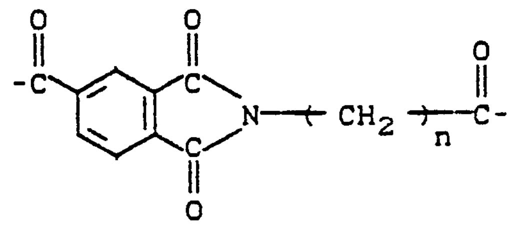

(I)

- O - Ar - O - (II)

sowie gegebenenfalls

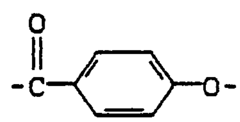

(III)

worin n eine ganze Zahl von 3 bis 12 darstellt, Ar aus 1,4-Phenyleneinheiten oder 4,4′-Biphenyleneinheiten oder deren Mischungen besteht, wobei bis zu 50 Mol-% dieser Einheiten durch andere 6 bis 18 C-Atome enthaltende bivalente aromatische Reste oder der Mischungen, deren kettenverlängernde Bindungen zu 50 bis 100 Mol-% coaxial oder parallel entgegengesetzt und zu 50 bis 0 Mol-% gewinkelt sind und die durch $C_1$-$C_4$-Alkoxygruppen oder Halogenatome substituiert sein können, ersetzt sein können, mit der Maßgabe, daß das Molverhältnis III/I = 0 bis 4,0, vorzugsweise 0 bis 3,0 insbesondere 0,5, vorzugsweise 0,98 bis 1,02, insbesondere 1,0 betragen.

Bei der Verwendung von Diphenolen, die Reste Ar enthalten, deren kettenverlängernde Bindungen gewinkelt sind oder die substituiert sind, wird man eine Menge nicht überschreiten, die die thermotropen Eigenschaften der resultierenden Polyester verlorengehen läßt.

Bevorzugte Diphenole, die zu Resten II führen, in denen Ar kein 1,4-Phenylenrest oder 4,4′-Bihenylenrest ist, sind beispielsweise 1,4-, 1,5-, 2,6- und 2,7-Naphthalindiol, Chlorhydrochinon, Methylhydrochinon, Phenylhydrochinon, Resorcin, Bisphenol-A, o,o,o′,o′-Tetramethyl-, -chlor, -brombisphenol-A, 4,4′-Dihydroxybenzophenon, 4,4′-Dihydroxydiphenylsulfid sowie Mischungen der genannten Verbindungen.

In den erfindungsgemäßen Polyestern können bis zu 10 Mol-% der Einheiten II durch andere Dicarbonsäurereste ersetzt werden, deren kettenverlängernde Bindungen coaxial oder parallel entgegengesetzt oder gewinkelt sind. Dicarbonsäuren, die zu solchen Resten führen, sind vorzugsweise Terephthalsäure, Isophthalsäure, 4,4′-Biphenyldicarbonsäure, 4,4′-Terephenyldicarbonsäure, 2,6-, 1,4-, 1,5-, 2,7-Naphthalinidicarbonsäure, Azobenzoldicarbonsäure, Stilbendicarbonsäure, Tolandicarbonsäure, 4,4′-, 3,4′-Diphenyletherdicarbonsäure, 4,4′-, 3,4′-Benzophenondicarbonsäure und Methyl-, Ethyl-, Phenyl- und Chlorterephthalsäure.

Die erfindungsgemäßen Polyester können bis zu 10 Mol-% Carbonatgruppen, bezogen auf die Summe von Ester- und Carbonatgruppen enthalten, sind jedoch vorzugsweise frei von Carbonatgruppen.

Die erfindungsgemäßen Polyester können die Einheiten aus den Resten I und II und die Reste III in statistischer Verteilung oder in Blöcken enthalten.

Als Endgruppen können die erfindungsgemäßen Polyester -COOH, -H, -OH, $-OC_6H_5$, Acyloxy oder von

Kettenabbrechern herrührende Rest enthalten. Bevorzugte Kettenabbrecher sind monofunktionelle aromatische Hydroxylverbindungen wie 4-Hydroxydiphenyl, p-Nonylphenol, 4-(1,1,3,3-Tetramethylbutyl)-phenol, β-Naphthol und aromatische Monocarbonsäuren, wie Diphenylcarbonsäuren und Naphthalincarbonsäuren. Kettenabbrecher können in Mengen von 0,5 bis 5 Mol-%, bei Carbonsäuren bezogen auf die Summe der Reste I und III, bei Phenolen bezogen auf die Rest II und III, eingesetzt werden.

Es können auch verzweigende drei- oder höherfunktionelle - vorzugsweise aromatische-Monomere in Mengen von 0,1 -1,0 Mol-%, bezogen auf die Summe der Reste I, II und III, wie z.B. Phloroglucin, 1,3,5-Benzoltricarbonsäure und 3,5-Dihydroxybenzoesäure, eingesetzt werden.

Die erfindungsgemäßen Polyester besitzen in der Regel eine inhärente Viskosität von mindestens 0,3, vorzugsweise von mindestens 0,6 dl/g (gemessen an einer Lösung von 5 mg Polyester/ml p-Chlorphenol bei 45 °C). Sollten Polyester in p-Chlorphenol unlöslich sein, wird angenommen, daß sie die angegebene Mindestviskosität besitzen; sie sind somit erfindungsgemäß, sofern sie den Parametern des Hauptanspruchs genügen.

Die erfindungsgemäßen Polyester besitzen vorzugsweise eine Schmelzviskosität von weniger als 1 000 Pa.s, gemessen bei einer Schergeschwindigkeit von $10^3$ $sec^{-1}$ unter Verwendung einer Düse mit einem Länge/Durchmesserverhältnis von 20 bei einer Temperatur von weniger als 330 °C.

Die erfindungsgemäßen Polyester können nach verschiedenen Verfahren hergestellt werden, z.B. durch Kondensation bzw. Umesterung der von den Resten I, II und gegebenenfalls III abgeleiteten Dicarbonsäuren, Diphenole sowie Hydroxycarbonsäuren oder ihrer reaktionsfähigen Derivate und anschließende Polykondensation.

Beispiele für bevorzugte Ausgangverbindungen sind ihre Arylester, ihre Acylester und ihre Säurechloride.

Nach einem bevorzugten Syntheseverfahren werden die niederen Acylester, vorzugsweise die Acetate, der von den Resten II abgeleiteten Diphenole sowie gegebenenfalls der von den Resten III abgeleiteten Hydroxycarbonsäuren mit von den Resten I abgeleiteten Dicarbonsäuren umgestzt, wobei die Acylester auch in situ hergestellt werden können.

Nach einem weiteren bevorzugten Syntheseverfahren werden die von den Resten I abgeleiteten Dicarbonsäuren durch Umsetzung von Trimellithsäureanhydrid und dem entsprechenden Lactam in situ erzeugt und ohne weitere Isolierung mit den niederen Acylestern, vorzugsweise den Acetaten, der von den Resten II abgeleiteten Diphenole sowie gegebenenfalls der von den Resten III abgeleiteten Hydroxycarbonsäuren umgesetzt ("Eintopfverfahren").

Diese Reaktionen können in der Schmelzhase durchgeführt werden; möglich ist jedoch auch die Reaktion in Gegenwart eines flüssigen wärmeüberleitenden Mediums, das einen hohen Siedepunkt hat.

Die Reste I, II und III werden im Verhältnis der Ausgangskomponenten in den Polyester eingebaut.

Es kann zweckmäßig sein, sowohl die Kondensations- bzw. Umesterungsreaktionen als auch die Polykondensationsreaktionen katalytisch zu beschleunigen. Derartige Katalysatoren sind bekanntlich z.B. Lewis-Säuren und Halogenwasserstoffsäuren; Oxide, Hydride, Hydroxide, Halogenide, Alkoholate, Phenolate, Salze anorganischer oder organischer Säuren (vorzugsweise Carbonsäuresalze), Komplexsalze oder Mischsalze der Erdalkalimetalle, wie z.B. Magnesium, Calcium; der Nebengruppenelemente, wie z.B. Vanadium, Titan, Mangan, Cobalt, Nickel, Zink, Lanthan, Cer, Zirkonium oder der Elemente aus anderen Gruppen des Peroidensystems, wie z.B. Germanium, Zinn, Blei und Antimon oder auch die Alkalimetalle oder Erdalkalimetalle selbst, insbesondere Natrium, Natriumhydroxid, Lithiumacetat, Natriumacetat, Kaliumacetat, Calciumacetat, Magnesiumacetat, Cobaltacetat, Zinkacetat, Calciumbenzoat, Magnesiumacetylacetonat, Zinkacetylacetonat, Vanadyl-$C_1$-$C_8$-alkoxide, Titanalkoxide wie Titantetrabutylat, Titantetrapropylat, Alkoxytitansilikate, Zirkoniumbutylat, Zirkoniumpropylat, Titantetraphenolat, Natriumphenolat, Germaniumdioxid, Antimontrioxid, Dialkyl- und Diarylzinnoxid, Dibutylzinn-diacetat, Di-butyl-dimethoxy-zinn.

Die Katalysatormengen betragen vorzugsweise 0,001 bis 1, insbesondere 0,01 bis 0,2 Gew.-%, bezogen auf das Gesamtgewicht der eingesetzten Monomeren.

Die erfindungsgemäßen Polyester können bei Temperaturen von 150 bis 330 °C hergestellt werden, wobei man im allgemeinen die Reaktion bei niedrigen Temperaturen beginnt und im Verlaufe der Reaktionsfortschreitung kontinuierlich die Temperatur erhöht. Bei nachlassender Reaktionsgeschwindingkeit kann ein Vakuum angelegt werden, wobei der Druck vorzugsweise kontinuierlich von Normaldruck bis ca. 0,1 mbar gesenkt wird.

Das erhaltene Produkt kann - in Granulat- oder Pulverform - einer Festphasennachkondensation unter vermindertem Druck bei Temperaturen von 150 bis 300 °C unterworfen werden; nach 1 bis 25 Stunden haben sich das Molekulargewicht erhöht und die daraus resultierenden Eigenschaften des Polyesters merklich verbessert.

Weiterer Gegenstand der Erfindung ist also ein Verfahren zur Herstellung der neuen Polyester durch

Umsetzung der von den Resten I abgeleiteten Dicarbonsäuren - die auch in situ aus Trimellithsäureanhydrid und entsprechenden Lactamen erzeugt werden können - mit von den Resten II und gegebenenfalls III abgeleiteten Diphenolen und Hydroxycarbonsäuren bzw. deren reaktiven Derivaten - die ebenfalls in situ erzeugt werden können - gegebenenfalls in Gegenwart von Katalysatoren, Kettenabbrechern und Verzweigungsmitteln, bei Temperaturen von 150 -330 °C, gegebenenfalls unter vermindertem Druck.

Die erfindungsgemäßen thermotropen Polyester können infolge ihrer relativ geringen Schmelzviskosität vorteilhaft aus der Schmelze zu Spritzgußformteilen, Filamente, Fasern, Bändern und Filmen verarbeitet werden, wobei durch auftretende Scherkräfte eine Molekülorientierung erzielt wird, die in hohem Maße von der Stärke der Scherkräfte beeinflußt wird. Desweiteren zeigen sie eine ausgeprägte Strukturviskosität, das heißt, daß die Schmelzviskosität bei Erhöhung der Scherkräfte stark abfällt. Geeignete Verarbeitungsverfahren sind Spritzguß, Extrusion, Pultrusion, Pressen, Thermoformen und Schmelzspinnen.

Aus den erfindungsgemäßen Polyestern können Formteile hoher Festigkeit und Steifigkeit, guter Zähigkeit -insbesondere im Bereich tiefer Temperaturen -, hoher Bruchdehnung und großer Dimensionstabilität hergestellt werden. Da die Polyester weiterhin hohe Chemikalienresistenz und gute Flammwidrigkeit aufweisen, eignen sie sich bevorzugt zur Herstellung von

- Umhüllungen von Lichtwellenleitern,
- elektrotechnischen Artikeln, wie z.B. Isolatoren, Leiterplatten für gedruckte Schaltungen, Steckkontakten, Umhüllungen für integrierte Schaltungen, Armaturenteilen,
- Teilen chemisch-technischer Anlagen, wie z.B. Rohren, Behälterauskleidungen, Rotoren, Gleitlagern, Dichtungen, Füllkörpern,
- Teilen medizinisch-technischer Geräte, wie z.B. Bauteilen von Klimaanlagen, Ventilteilen.

Die erfindungagemäßen Polyester können aber auch als Überzugs- und Beschichtungsmaterial (pulverförmig oder dispergiert) verwendet werden. Auch zur Herstellung verstärkter oder gefüllter Formmassen mit einem Verstärker- bzw. Füllstoffgehalt von 5 bis 65 Gew.-%, bezogen auf verstärkte bzw. gefüllte Formmasse, sind sie bestens geeignet.

Weiterer Gegenstand der Erfindung ist also die Verwendung der neuen Polyester zur Herstellung von Formkörpern, Filamenten, Fasern und Filmen.

## Beispiele

Die Prüfung der Schlagzähigkeit $a_n$ erfolgte an Normkleinstäben gemäß DIN 53 453 (ISO/R 179) bei 23 °C jeweils an 10 Prüfkörpern. Die Bestimmung der Biegefestigkeit wurde an Normkleinstäben gemäß DIN 53 452 (ISO R 178, Dreipunktbiegeversuch) durchgeführt. Der Biege-E-Modul wurde gemäß DIN 53 457 ermittelt. Zugfestigkeit und Reißdehung $\epsilon_R$ wurden gemäß DIN 53 455 (ISO/R 527), der Zug-E-Modul gemäß 53 457 gemessen.

### Beispiel 1

In ein mit Stickstoff gespültes und ausgeheiztes 1 l-Planschliffgefäß mit Planschliffdeckel, Rührer, Stickstoffeinleitung und Vigreuxkolonne mit Destillationsaufsatz wurden folgende Substanzen eingewogen:

69,0 g ( ≙ 0,500 mol) p-Hydroxybenzoesäure,
92,4 g ( ≙ 0,246 mol) N-(10-Carboxydecamthylen)-trimellithsäureimid,
18,1 g ( ≙ 0,165 mol) Hydrochinon,
15,3 g ( ≙ 0,082 mol) 4,4′-Dihydroxydiphenyl,
106,5 g ( ≙ 1,043 mol) Essigsäureanhydrid,
0,02 g Magnesiumacetat und
0,02 g Germaniumdioxid.

Unter Stickstoffatomosphäre wurde mittels Salzbad auf 180 °C erhitzt. Anschließend wurde über einen Zeitraum von 5 Stunden durch allmähliche Erhöhung der Badtemperatur bis auf 280 °C die Hauptmenge Essigsäure abdestilliert (ca. 104 g). Zur Vervollständigung des Umsatzes wurde der Druck im Verlauf von weiteren 45 Minuten stufenweise bis auf 18 mbar abgesenkt. Während dieser Vakuumphase nahm die Viskosität der entstandenen Polymerschmelze stark zu. Die Schmelze wurde daher langsamer gerührt. Am Ende dieser Phase war eine Gesamtmenge von 115,4 g Essigsäure (enthält überschüssiges Acetanhydrid) aufgefangen worden.

Das beige Reaktionsprodukt mit einer inhärenten Viskosität von 0,86 dl/g (gemessen, wie in Tabelle 1 angegeben) wurde gemahlen und bei 220 °C einer Festphasennachkondensation unterworfen (30 Stunden

bei einem Druck von 1 mbar). Das so erhaltene Polyesterimid war in p-Chlorphenol unlöslich und wies im Bereich von 220 -340 ° C eine optische anisotrope Schmelzphase auf. Zur Prüfung der im folgenden aufgeführten mechanischen Eigenschaften wurde das Produkt bei einer Temeratur von 250 ° C durch Spritzguß zu Normkleinstäben und Zugstäben verarbeitet.

Schlagzähigkeit: 31 $kJ/m^2$
Zug-E-Modul: 7460 MPa
Zugfestigkeit: 100 MPa
Reißdehung: 4,5 %
Biege-E-Modul: 4900 MPa
Biegefestigkeit: 100 MPa

Beispiel 2:

In die im Beispiel 1 beschriebene Reaktionsapparatur wurden folgende Substanzen eingewogen:
107,8 g ( ≙ 0,781 mol) p-Hydroxybenzoesäure,
144,2 g ( ≙ 0,384 mol) N-(10-Carboxydecamthylen)-trimellithsäureimid,
42.4 g ( ≙ 0,384 mol) Hydrochinon,
166,2 g ( ≙ 1,628 mol) Essigsäureanhydrid,
0,02 g Magnesiumacetat und
0,02 g Germaniumdioxid.

Unter Stickstoffatmosphäre wurde mittels Salzbad auf 200 ° C erhitzt. Anschließend wurde über einen Zeitraum von 5,5 Stunden durch allmähliche Erhöhung der Badtemperatur bis auf 295 ° C die Hauptmenge Essigsäure abdestilliert. Zur Vervollständigung des Umsatzes wurde der Druck im Verlauf einer weiteren Stunde stufenweise bis auf 20 mbar abgesenkt, wobei die Viskosität der Schmelze stark anstieg. Am Ende dieser Phase war eine Gesamtmenge von 180,0 g Essigsäure (enthält überschüssiges Acetanhydrid) aufgefangen worden.

Das beige-braune Reaktionsprodukt mit einer inhärenten Viskosität von 1,63 dl/g (gemessen, wie in Tabelle 1 angegeben) wurde gemahlen und der in Beispiel 1 beschriebenen Festphasennachkondensation unterworfen. Das erhaltene Polyesterimid war in p-Chlorphenol unlöslich und wies im Bereich von 240 - 340 ° C eine optisch anisotrope Schmelzphase auf.

Bei einer Verarbeitungstemperatur von 260 ° C wurden durch Spritzguß Probekörper mit folgenden mechanischen Eigenschaften hergestellt:

Schlagzähigkeit: 27 $kJ/m^2$
Zug-E-Modul: 6930 MPa
Zugfestigkeit: 97 MPa
Reißdehung: 4,7 %
Biege-E-Modul: 4940 MPa
Biegefestigkeit: 92 MPa

Beispiel 3

In die in Beispiel 1 beschriebene Reaktionsapparatur wurden folgende Substanzen eingewogen:
187,5 g ( ≙ 0,500 mol) N-(10-Carboxydecamthylen)-trimellithsäureimid,
93,0 g ( ≙ 0,500 mol) 4,4′-Dihydroxydiphenyl,
107,2 g ( ≙ 1,050 mol) Essigsäureanhydrid,
0,02 g Magnesiumacetat und
0,02 g Germaniumdioxid.

Unter Stickstoffatmosphäre wurde mittels Salzbad auf 200 ° C erhitzt. Anschließend wurde über einen Zeitraum von 5,5 Stunden durch allmähliche Erhöhung der Badtemperatur bis auf 300 ° C die Hauptmenge Essigsäure abdestilliert. Zur Vervollständigung des Umsatzes wurde der Druck im Verlauf von weiteren 40 Minuten stufenweise bis auf 20 mbar abgesenkt, wobei die Viskosität der Schmelze stark anstieg. Am Ende dieser Phase war eine Gesamtmenge von 117,0 g Essigsäure (enthält restliches Acetanhydrid) aufgefangen worden.

Das beige-braune Reaktionsprodukt mit einer inhärenten Viskosität von 0,74 dl/g (gemessen, wie in Tabelle 1 angegeben) wurde gemahlen und der in Beispiel 1 beschriebenen Festphasennachkondensation unterworfen. Das erhaltene Polyesterimid war in p-Chlorphenol unlöslich und wies im Bereich von 280 -

340 °C eine optisch anisotrope Schmelzphase auf.

Bei einer Verarbeitungstemperatur von 295 °C wurden durch Spritzguß Probekörper mit folgenden mechanischen Eigenschaften hergestellt:

Schlagzähigkeit: 108 $KJ/m^2$
Zug-E-Modul: 3640 MPa
Zugfestigkeit: 111 MPa
Reißdehnung: 12,0 %
Biege-E-Modul: 3470 MPa
Biegefestigkeit: 101 MPa

Beispiel 4

In eine mit Stickstoff gespülte und ausgeheizte Schmelzpolykondensationsapparatur, bestehend aus 250 ml-Planschliffgefäß mit Planschliffdeckel, Rührer, Stickstoffeinleitung und Vigreuxkolonne mit Destillationsaufsatz, wurden folgende Substanzen eingewogen:

29,1 g (= 0,10 mol) N-(4-Carboxytetramethylen)-trimellithsäureimid,
19,4 g (= 0,10 mol) Hydrochinondiacetat und
0,10 g Magnesiumoxid.

Unter Stickstoffatmosphäre wurde mittels Salzbad 15 Minuten auf 220 °C, 15 Minuten auf 250 °C und 60 Minuten auf 280 °C erhitzt, wobei die Hauptmenge der gebildeten Essigsäure abdestillierte. Anschließend wurde zur Vervollständigung des Umsatzes im Verlauf von weiteren 60 Minuten der Druck stufenweise bis auf 20 mbar abgesenkt, wobei die Viskosität der Schmelze stark anstieg.

Das Reaktionsprodukt wurde durch Auflösen in Dichlormethan/Trifluoressigsäure (4:1 Gewichtsteile) und anschließende Fällung in Methanol gereinigt und bei 80 °C/12 mbar getrocknet (Ausbeute: 85 % der Theorie). Das Polyesterimid besaß eine inhärente Viskosität von 0,33 dl/g (gemessen, wie in Tabelle 1 angegeben) und wies im Temperaturbereich von 210-320 °C eine optisch anisotrope Schmelzphase auf.

Beispiele 5 - 9

Unter Verwendung der in Beispiel 4 beschriebenen Reaktionsapparatur und des dort beschriebenen Verfahrens wurden die in Tabelle 1 aufgelisteten Polyesterimide hergestellt.

**Tabelle 1:** Thermotrope Polyesterimide mit N-(Carboxyalkylen)trimellithsäureimid-Einheiten

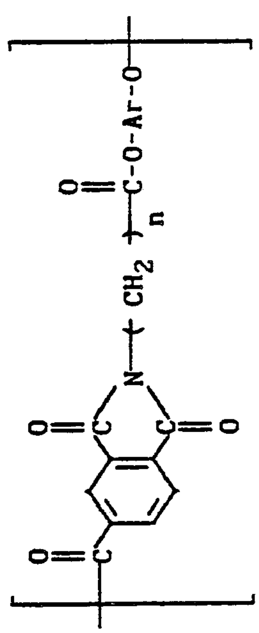

| Beispiel | n | Ar | Ausbeute (%) | inhärente Viskosität 1) (dl/g) | anisotrope Phase 2) (°C) |
|---|---|---|---|---|---|
| 5 | 5 | 1,4-Phenylen | 89 | 0.31 | 140 - 190 |
| 6 | 6 | 1,4-Phenylen | 79 | 0,62 | 200 - 250 |
| 7 | 6 | 4,4'-Biphenylen | 83 | 1,02 | 290 - 340 |
| 8 | 10 | 4,4'-Biphenylen | 91 | 0,71 | 230 - 320 |
| 9 | 11 | 4,4'-Biphenylen | 95 | 1,00 | 230 - 320 |

1) bestimmt durch Messung in p-Chlorphenol ($T = 45^{\circ}C$, $c = 5$ g/l)

2) bestimmt durch Differentialthermoanalyse/Polarisationsmikroskopie

## Ansprüche

1. Thermotrope Polyesterimide mit wiederkehrenden Einheiten der Formeln

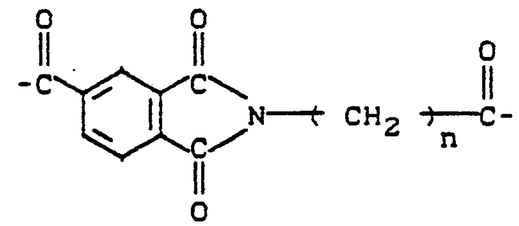

(I)

- O - Ar - O - (II)

sowie gegebenenfalls

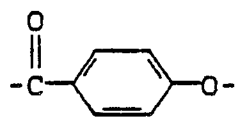

(III)

worin n eine ganze Zahl von 3 bis 12 darstellt, Ar aus 1,4-Phenylenresten oder 4,4′-Biphenylenresten oder deren Mischungen besteht, wobei bis zu 50 Mol-% dieser Reste durch andere 6 bis 18 C-Atome enthaltende bivalente aromatische Reste oder deren Mischungen, deren kettenverlängernde Bindungen zu 50 bis 100 Mol-% coaxial oder parallel entgegengesetzt und zu 50 bis 0 Mol-% gewinkelt sind und die durch $C_1$-$C_4$-Alkoxygruppen oder Halogenatome substituiert sein können, ersetzt sein können, mit der Maßgabe, daß das Molverhältnis III/I = 0 bis 4,0 und das Molverhältnis I/II 0,95 bis 1,05 betragen.

2. Polyesterimide nach Anspruch 1, dadurch gekennzeichnet, daß das Molverhältnis III/I 0 bis 3,0 beträgt.

3. Polyesterimide nach Ansprüchen 1 und 2, dadurch gekennzeichnet, daß das Molverhältnis III/I 0,5 bis 3,0 beträgt.

4. Polyesterimide nach Ansprüchen 1 - 3, dadurch gekennzeichnet, daß n eine ganze Zahl von 5 bis 10 darstellt.

5. Polyesterimide nach Ansprüchen 1 - 4, dadurch gekennzeichnet, daß Ar ausschließlich aus 1,4-Phenylenresten, 4,4′-Bisphenylenresten oder deren Mischungen besteht.

6. Verfahren zur Herstellung der Polyesterimide nach Ansprüchen 1 - 5 durch Umsetzung der von den Resten I abgeleiteten Dicarbonsäuren - die auch in situ erzeugt werden können - mit von den Resten II und gegebenenfalls III abgeleiteten Diphenolen und Hydroxycarbonsäuren bzw. deren reaktiven Derivaten - die ebenfalls in situ hergestellt werden können -gegebenenfalls in Gegenwart von Katalysatoren, Kettenabbrechern und Verzweigungsmitteln, bei Temperaturen von 150 - 330 °C, gegebenenfalls unter vermindertem Druck.

7. Verfahren nach Anspruch 6, dadurch gekennzeichnet, daß sich eine Festphasennachkondensation anschließt.

8. Verwendung der Polyesterimide nach Ansprüchen 1 -5 zur Herstellung von Formkörpern, Filamenten, Fasern und Folien.

Europäisches Patentamt

# EUROPÄISCHER RECHERCHENBERICHT

Nummer der Anmeldung

EP 88 10 8233

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 076 483 (DU PONT)<br>* Ansprüche 1-6 *<br>--- | 1-8 | C 08 G 73/16 |
| A | US-A-3 880 812 (GOLINKIN et al.)<br>* Ansprüche 1-3,9-10 *<br>--- | 1-8 | |
| A | EP-A-0 171 707 (BAYER AG)<br>* Anspruch 1 *<br>--- | 1 | |
| A | EP-A-0 161 413 (HOECHST AG)<br>* Ansprüche 1-9 *<br>--- | 1-8 | |
| A,D | DE-A-3 516 427 (BAYER AG)<br>* Ansprüche 1-7 *<br>--- | 1-8 | |
| A | PATENT ABSTRACTS OF JAPAN, Band 3, Nr. 109 (C-58), 12. September 1979, Seite 117 C 58; & JP-A-54 88 996 (TOYO BOSEKI K.K.) 14-07-1979<br>* Insgesamt *<br>----- | 1-8 | |
| | | | **RECHERCHIERTE SACHGEBIETE (Int. Cl.4)** |
| | | | C 08 G |

Der vorliegende Recherchenbericht wurde für alle Patentansprüche erstellt

| Recherchenort | Abschlußdatum der Recherche | Prüfer |
|---|---|---|
| DEN HAAG | 31-08-1988 | GLANDDIER A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)